# EUROPEAN PATENT APPLICATION

(11) **EP 4 831 630 A1**
(43) Date of publication of application: **28.10.2026**
(21) Application number: 24907989.8
(22) Date of filing: 16.12.2024
(51) Int. Cl.: G01N 27/26, H01M 4/38, H01M 4/136, H01M 10/44, H01M 10/052, H01M 4/02

(54) **METHOD FOR ANALYZING QUALITY OF LITHIUM SULFIDE IN LITHIUM-SULFUR ELECTRODE**

(30) Priority: 18.12.2023 KR 20230185231
(71) Applicant: POSCO Holdings Inc., Pohang-si, Gyeongsangbuk-do 37859 (KR); POSTECH Research and Business Development Foundation, Pohang-si, Gyeongsangbuk-do 37673 (KR)
(72) Inventor: CHUNG, Garam, Pohang-si, Gyeongsangbuk-do 37859 (KR); JO, Chang Shin, Pohang-si, Gyeongsangbuk-do 37673 (KR); JEONG, Yun Ho, Pohang-si, Gyeongsangbuk-do 37673 (KR); KIM, Byoungju, Pohang-si, Gyeongsangbuk-do 37859 (KR); KO, Young-Seon, Pohang-si, Gyeongsangbuk-do 37859 (KR)
(74) Representative: Pfenning, Meinig & Partner mbB
(86) International application number: PCT/KR2024/020440
(87) International publication number: WO 2025/135706

(57) **Abstract**

The present invention relates to a method for analyzing quality of lithium sulfide in a lithium-sulfur electrode, which is a method for analyzing a residual lithium compound in a lithium-sulfur active material, the method comprising: preparing an electrode comprising a cathode active material; charging and discharging the electrode to obtain first data on voltage (V) according to capacity (Specific Capacity); and obtaining and analyzing data according to an area value calculated by integrating a differential value (dQ/dV) obtained by differentiating a battery capacity (Q) according to the voltage (V) with respect to the voltage (V) from the first data.

## Description

### [TECHNICAL FIELD]

The present invention relates to an impurity analysis method, and more particularly, to a method for analyzing quality of lithium sulfide in a lithium-sulfur electrode.

### [BACKGROUND ART]

Lithium secondary batteries are widely used from small electronic devices such as mobile phones and laptops to large devices such as electric vehicles (EVs) and energy storage systems (ESSs). As the field of application of lithium secondary batteries expands into all areas of life, secondary batteries that simultaneously satisfy not only high performance such as high energy density and long life, but also stability are required. Since lithium secondary batteries have a theoretical capacity of only about 250 mAh/g or less, there is a problem that it is difficult to use them in devices such as electric vehicles and large-capacity power storage systems that require high energy density.

In order to overcome these limitations, lithium-sulfur (Li-S) batteries that can implement a high theoretical capacity density of 2,600 mAh/g are attracting attention. The lithium-sulfur battery uses a sulfur-based compound having a disulfide bond as a cathode active material and a material containing lithium metal or lithium ions as an anode active material.

However, most of the electrolytes used in the batteries were liquid electrolytes using organic solvents. However, since safety issues such as leakage of the electrolyte and risk of fire are constantly raised, such liquid electrolytes require strict packaging, and accordingly, there has been a limit to increasing energy density above a certain level.

Accordingly, the necessity for an all-solid-state battery using a solid electrolyte instead of a liquid electrolyte has emerged. Since all-solid-state batteries exclude organic solvents (liquid electrolytes), battery cells may be manufactured more safely.

In addition, since inorganic-based solid electrolytes do not decompose in a wide voltage range and are stable, it is possible to utilize high-voltage electrode materials that were difficult to use in conventional liquid electrolytes.

Such solid electrolytes are divided into oxide-based solid electrolytes and sulfide-based solid electrolytes, and interest in sulfide-based solid electrolytes is increasing because sulfide-based solid electrolytes have higher ionic conductivity than oxide-based ones.

Main raw material for sulfide-based solid electrolytes is lithium sulfide (Li₂S). At this time, the lithium-sulfur battery is affected by the quality of lithium sulfide on the manufacturing yield and performance of the solid electrolyte. Specifically, it is confirmed that when the Li₂CO₃ content in lithium sulfide increases from 1 to 10 wt%, the manufacturing yield of the solid electrolyte decreases from 97% to 80%. In addition, it is confirmed that the solid electrolyte performance is affected depending on the type of compound (Li₂O/Li₂CO₃) related to the oxygen content in Li₂S.

However, there is a problem that it is difficult to specifically quantify trace impurities in lithium sulfide (Li₂S). Since each material in lithium sulfide develops capacity at a unique voltage range, and Li₂O among impurities develops capacity near about 3.5 V, research on a method for analyzing quality of lithium sulfide by determining the amount of trace impurities based on this is required.

### [DISCLOSURE OF INVENTION]

### [TECHNICAL PROBLEM]

A quality analysis method for lithium sulfide in a lithium-sulfur electrode according to an embodiment of the present invention is to provide a quantification method for the amount of trace impurities in lithium sulfide (Li₂S).

### [TECHNICAL SOLUTION]

A method for analyzing quality of lithium sulfide in a lithium-sulfur electrode according to an embodiment of the present invention is a method for analyzing a residual lithium compound in a lithium-sulfur active material, the method may include: preparing an electrode including a cathode active material; obtaining first data on voltage according to capacity (Specific Capacity) by charging and discharging the electrode; and obtaining and analyzing data according to an area value calculated by integrating a differential value (dQ/dV) obtained by differentiating a battery capacity (Q) according to the voltage (V) with respect to the voltage (V) from the first data.

In an embodiment, the obtaining and analyzing data may include: obtaining second data on the differential value (dQ/dV) obtained by differentiating the battery capacity (Q) according to the voltage (V) of the electrode with respect to the voltage (V) from a first processing on the first data; and obtaining third data on an area value calculated by integrating the differential value (dQ/dV) obtained by differentiating the battery capacity (Q) according to the voltage (V) with respect to the voltage (V) from a second processing on the second data.

In an embodiment, the method may include calculating content of the residual lithium compound from the third data according to Equation 1 below. [Equation 1] $0.00665 < Y = aX + b < 0.00744$ (In Equation 1, a is 2.88689 × 10-4, b is 0.00563, Y means a dQ/dV area of an Li₂O electrode, and X means an amount of Li₂O in the lithium sulfide)

In an embodiment, the electrode may include lithium sulfide, a conductive material, and a binder; and the content of the lithium sulfide may be 55 to 75 wt% based on 100 wt% of total content of the lithium sulfide, the conductive material, and the binder. In an embodiment, the obtaining first data may include obtaining data on voltage according to capacity by charging and discharging the electrode under charge-discharge conditions in a range of 1.5 V to 3.9 V at a current rate of 0.01 C-rate.

In an embodiment, the obtaining second data may include differentiating the battery capacity (Q) of the first data with respect to the voltage (V) and obtaining differential value (dQ/dV) obtained by differentiating the battery capacity (Q) with respect to the voltage (V) in an X-axis of voltage and a Y-axis of battery capacity (Q). In an embodiment, the obtaining second data may include extracting the differential value (dQ/dV) obtained by differentiating the battery capacity (Q) with respect to the voltage (V) when the voltage of the electrode is in the range of 3.4 to 3.7 Voltage.

In an embodiment, the obtaining third data may include obtaining third data by processing the second data by obtaining a graph for a segment of 3.4 V to 3.7 V of the second data using an Origin program and integrating the graph to obtain an absolute area of each graph. In an embodiment, the residual lithium compound may be lithium oxide.

In an embodiment, the lithium oxide may be Li₂O. In an embodiment, the content of the residual lithium compound may be 0 to 10 wt% based on 100 weight % of the lithium sulfide.

A method for analyzing quality of lithium sulfide in a lithium-sulfur electrode according to another embodiment of the present invention is a method for analyzing a residual lithium compound in a lithium-sulfur active material, the method may include: preparing an electrode including a cathode active material; obtaining first data on voltage according to capacity (Specific Capacity) by charging and discharging the electrode; obtaining second data on a differential value (dQ/dV) obtained by differentiating battery capacity (Q) according to the voltage of the electrode with respect to the voltage (V) by first-processing the first data; obtaining third data on an area value calculated by integrating the differential value (dQ/dV) obtained by differentiating the battery capacity (Q) according to the voltage (V) with respect to the voltage (V) by second-processing the second data; and calculating content of the residual lithium compound from the third data according to Equation 2 below. <Equation 2> $0.00300 < Y = aX + b < 0.00800$ (In Equation 2, a is 4.71536 × 10⁻⁴, b is 0.00534, Y means a dQ/dV area of an Li₂O electrode, and X means an amount of Li₂O in the lithium sulfide)

In an embodiment, the content of the residual lithium compound may be 0 to 5 wt% based on 100 weight % of the lithium sulfide. In an embodiment, the residual lithium compound may be lithium oxide. In an embodiment, the lithium oxide may be Li₂O.

### [ADVANTAGEOUS EFFECTS]

A method for analyzing quality of lithium sulfide for lithium-sulfur secondary battery according to an embodiment of the present invention is to provide a quantification method for the amount of trace impurities in lithium sulfide (Li₂S) through an electrochemical property evaluation method.

### [BRIEF DESCRIPTION OF DRAWINGS]

FIG. 1 illustrates a charge-discharge graph of a lithium-sulfur electrode according to an embodiment of the present invention.
FIG. 2 is a graph obtained by processing the charge-discharge graph of the lithium-sulfur electrode of FIG. 1.
FIG. 3 is an enlarged graph of a dQ/dV area near 3.4 to 3.7 Voltage in the charge-discharge graph of FIG. 2.
FIG. 4 is a graph confirming a calibration curve for an integrated value for the dQ/dV area range near 3.4 to 3.7 Voltage of FIG. 3 after calculating it by the method below.
FIG. 5a and FIG. 5b are graphs illustrating a calibration curve for the measurement values of FIG. 4 according to content of lithium oxide, which is a residual lithium compound.

### [BEST MODE FOR CARRYING OUT THE INVENTION]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is only for referring to specific embodiments and is not intended to limit the present invention. The singular forms used herein include the plural forms as well unless the phrases clearly indicate the opposite meaning. The meaning of "comprising" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or another part may be accompanied therebetween. In contrast, when a part is referred to as being "directly on" another part, no other part is interposed therebetween.

Unless otherwise defined, all terms including technical terms and scientific terms used herein have the same meaning as commonly understood by a person having ordinary skill in the art to which the present invention belongs. Terms defined in commonly used dictionaries are further interpreted as having a meaning consistent with the related technical literature and the presently disclosed content, and are not interpreted in an ideal or very formal sense unless defined.

In an embodiment of the present invention, a method for analyzing quality of lithium sulfide in a lithium-sulfur electrode may be a method for analyzing a residual lithium compound which is an impurity in a lithium-sulfur material. Specifically, the method for analyzing quality of lithium sulfide in a lithium-sulfur electrode includes: preparing an electrode including a cathode active material; obtaining first data on voltage according to capacity (Specific Capacity) by charging and discharging the electrode; and obtaining and analyzing data according to an area value calculated by integrating a differential value (dQ/dV) obtained by differentiating a battery capacity (Q) according to the voltage (V) with respect to the voltage (V) from the first data. The preparing an electrode including a cathode active material may include lithium sulfide (Li₂S), a conductive material, and a binder. In an embodiment, lithium sulfide (Li₂S) may be a material containing a residual lithium compound. Specifically, lithium sulfide (Li₂S) utilized in an electrode may contain impurities in a predetermined range. Depending on the content of impurities in lithium sulfide (Li₂S), it may cause a large difference in the efficiency of the battery when applied to a secondary battery. Accordingly, it is necessary to quantify and measure the content of the residual lithium compound, which is an impurity contained in the lithium sulfide (Li₂S).

In an embodiment, the content of lithium sulfide (Li₂S) may be 55 to 75 wt% based on 100 wt% of the total content of the lithium sulfide (Li₂S), conductive material, and binder. Specifically, the content of the lithium sulfide may be 60 to 70 wt%. By manufacturing an electrode in which the content of the lithium sulfide (Li₂S) satisfies the aforementioned range, a cathode applicable to a lithium-sulfur battery may be manufactured.

In an embodiment, the method for analyzing quality of lithium sulfide in a lithium-sulfur electrode may be performed by an electrochemical method. Specifically, the electrochemical method may calculate the content of a residual lithium compound in lithium sulfide based on data derived by charging and discharging the electrode.

The obtaining and analyzing data according to an area value calculated by integrating a differential value (dQ/dV) obtained by differentiating a battery capacity (Q) according to the voltage (V) with respect to the voltage (V) from the first data comprises obtaining second data on a differential value (dQ/dV) obtained by differentiating the battery capacity (Q) according to the voltage (V) of the electrode with respect to the voltage (V) by a first processing of the first data, and obtaining third data on an area value calculated by integrating the differential value (dQ/dV) obtained by differentiating the battery capacity (Q) according to the voltage (V) with respect to the voltage (V).

The obtaining the first data on the voltage according to the capacity (Specific Capacity) by charging and discharging the electrode may be deriving a charge-discharge graph after charging and discharging the electrode. Specifically, the first data may be data on the voltage according to the capacity by charging and discharging the electrode under charge-discharge conditions in a range of 1.5 V to 3.9 V at a current rate of 0.01 C-rate.

In an embodiment, in the obtaining the first data, the voltage may satisfy a range of 2.8 to 4.0 V. More specifically, the second data may satisfy the voltage range of 3.0 to 3.9 V.

When the voltage satisfies the aforementioned range in the obtaining the first data, quantification data for quality analysis of lithium sulfide in the lithium-sulfur electrode may be prepared. When the voltage deviates from the upper limit value of the aforementioned range, there is a problem that analysis accuracy is lowered and there is an electrolyte decomposition issue because overvoltage is excessively applied and capacity development of impurities is expected.

The obtaining second data on a differential value (dQ/dV) obtained by differentiating the battery capacity (Q) according to the voltage (V) of the electrode with respect to the voltage (V) by the first processing of the first data may be obtaining second data by differentiating the first data. Specifically, the second data may be obtained by differentiating the battery capacity (Q) of the first data, which is a result value for the charge-discharge graph of the electrode, with respect to the voltage (V), and obtaining differential value (dQ/dV) obtained by differentiating the battery capacity (Q) with respect to the voltage (V) in an X-axis of voltage and a Y-axis of battery capacity (Q).

In an embodiment, the obtaining second data may be processing and obtaining data using automatic calculation provided in a charge-discharge program when the first data is processed from a charge-discharge graph into a dQ/dV graph. Specifically, the processing the second data may be provided as a calculation within the program for a value obtained by differentiating the capacity with respect to the voltage after obtaining the voltage according to the capacity in the charge-discharge program.

In an embodiment, the obtaining the second data may include extracting the differential value (dQ/dV) obtained by differentiating the battery capacity (Q) with respect to the voltage (V) when the voltage of the electrode is in the range of 3.4 to 3.7 Voltage. In the obtaining the second data, when the voltage of the electrode satisfies the aforementioned range, it may be confirmed that a residual lithium compound, for example Li₂O, in lithium sulfide reacts so that the area value of the residual lithium compound in lithium sulfide increases as the content of the residual lithium compound increases.

In the obtaining the second data, when data in an area where the voltage of the electrode deviates from the lower limit value or the upper limit value of the aforementioned range is extracted, there is a problem that quantifiable data cannot be extracted according to the content change of the residual lithium compound in lithium sulfide.

The obtaining third data on an area value calculated by integrating the differential value (dQ/dV) obtained by differentiating the battery capacity (Q) according to the voltage (V) with respect to the voltage (V) by the second processing of the second data means data derived as an area value for the differential value (dQ/dV) obtained by differentiating the battery capacity (Q) according to the voltage in the second data with respect to the voltage (V) by integrating the data for the differential value of the second data.

In an embodiment, the obtaining the third data may be obtaining third data by processing the second data by obtaining a graph for a segment of 3.4 V to 3.7 V of the second data using an Origin program and integrating the graph to obtain an absolute area of each graph.

In an embodiment, the method for analyzing quality of lithium sulfide in a lithium-sulfur electrode may include calculating the content of the residual lithium compound from the third data according to Equation 1 below. <Equation 1> $0.00665 < Y = aX + b < 0.00744$ (In Equation 1, a may be 2.88689 × 10⁻⁴, b may be 0.00563, Y means the dQ/dV area of the Li₂O electrode, and X means the amount of Li₂O in lithium sulfide)

Equation 1 represents an indicator for the amount of Li₂O in lithium sulfide. Specifically, the lower limit value of the Equation 1 means the dQ/dV area of a 3 wt% Li₂O electrode, and the upper limit value of the Equation 1 may correspond to the dQ/dV area of a 4 wt% Li₂O electrode. Accordingly, it may be confirmed through Equation 1 that the amount of Li₂O in lithium sulfide used in the electrode of the present invention is between approximately 3 wt% to 4 wt%. In this way, the concentration of Li₂O in lithium sulfide may be predicted through Equation 1.

Equation 1 may be an indicator that is used to check the content of the residual lithium compound in lithium sulfide when the content of the residual lithium compound in lithium sulfide is 0 to 10 wt%. Equation 1 may satisfy 0.00454 to 0.00916. Specifically, the Y value may represent the minimum value and maximum value of the dQ/dV area. When Equation 1 deviates from the aforementioned range, reliability may be lowered.

In an embodiment, the method for analyzing quality of lithium sulfide in a lithium-sulfur electrode may include calculating the content of the residual lithium compound from the third data according to Equation 2 below. <Equation 2> $0.00300 < Y = ax + b < 0.00800$ (In Equation 2, a is 4.71536 × 10⁻⁴, b is 0.00534, Y means the dQ/dV area of the Li₂O electrode, and X means the amount of Li₂O in lithium sulfide)

Equation 2 may be an indicator that is used to check the content of the residual lithium compound in lithium sulfide when the content of the residual lithium compound in lithium sulfide is 0 to 5 wt%. Equation 2 may satisfy 0.00300 to 0.00800, specifically 0.00454 to 0.00760. Specifically, the Y value may represent the minimum value and maximum value of the dQ/dV area. When Equation 2 deviates from the aforementioned range, reliability may be lowered.

### [MODE FOR CARRYING OUT THE INVENTION]

Hereinafter, embodiments of the present invention will be described in detail. However, this is presented as an example, and the present invention is not limited thereby, and the present invention is only defined by the scope of the claims to be described later.

### <Experimental Examples>

### 1. Li-S electrode manufacture

A cathode having an active material layer formed thereon satisfying a total of 0.1 g with lithium sulfide (Li₂S), a conductive material, and a binder in a ratio of 65 : 30 : 5, respectively, is manufactured. Here, Super C is used as the conductive material, and polytetrafluoroethylene (PTFE) is used as the binder. In addition, a lithium metal anode with a thickness of 200 µm is used as an anode. Here, the size of the cathode electrode is 14 pi, and the anode is 16 pi.

A Li-S cathode is prepared using an electrolyte solution in which a bis(trifluoromethane)-sulfonamide lithium salt (LiTFSI) electrolyte is dissolved at a concentration of 1.0 M and 2.0 weight% of LiNO₃ is added to a solvent in which Dimethoxyethane/1,3-dioxolane(DME/DOL) is mixed at a volume ratio of 1:1.

### 2. Deriving charge-discharge graph of the Li-S electrode

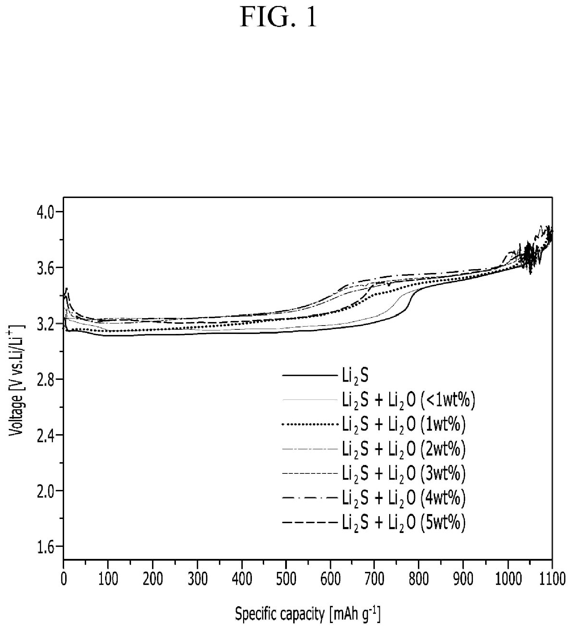

The lithium-sulfur electrode is subjected to only one 0.01 C charging in a voltage range of 1.5 V to 3.9 V. Thereafter, a graph profile is derived through only charging without a separation process. FIG. 1 illustrates a charge-discharge graph of a lithium-sulfur electrode according to an embodiment of the present invention.

Referring to FIG. 1, a charge-discharge graph when the lithium-sulfur electrode is charged at 0.01 C in a voltage range of 1.5 V to 3.9 V is shown. Specifically, it is a graph for voltage according to specific capacity of the lithium-sulfur electrode.

In the charge-discharge graph profile, overvoltage tendency or capacity development section shows a tendency for quantification, but it is confirmed that they were not matched one-to-one as the Li₂O concentration increased. However, since it is confirmed that there is a certain tendency near 3.4 to 3.7 V in the charge-discharge graph, the graph is additionally processed as follows.

### 3. First-processing of charge-discharge graph of the Li-S electrode

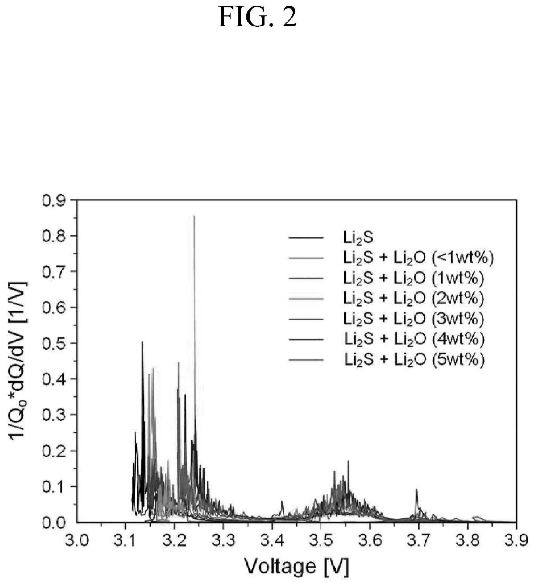

FIG. 2 is a graph obtained by processing the charge-discharge graph of the lithium-sulfur electrode of FIG. 1.

Referring to FIG. 2, it is a graph shown by differentiating the charge-discharge graph of the lithium-sulfur electrode of FIG. 1 using a charge-discharge program. Specifically, FIG. 2 illustrates the dQ/dV area according to the Voltage of the lithium-sulfur electrode. dQ/dV means a value obtained by differentiating battery capacity (Q) with respect to the voltage (V), and the dQ/dV area according to Voltage is an integrated value of the differential value and may mean a capacity at which Li₂O in lithium sulfide reacts.

According to FIG. 2, it is confirmed that a tendency is confirmed near the range of 3.4 to 3.7 Voltage where Li₂O is expected to react depending on the Li₂O content.

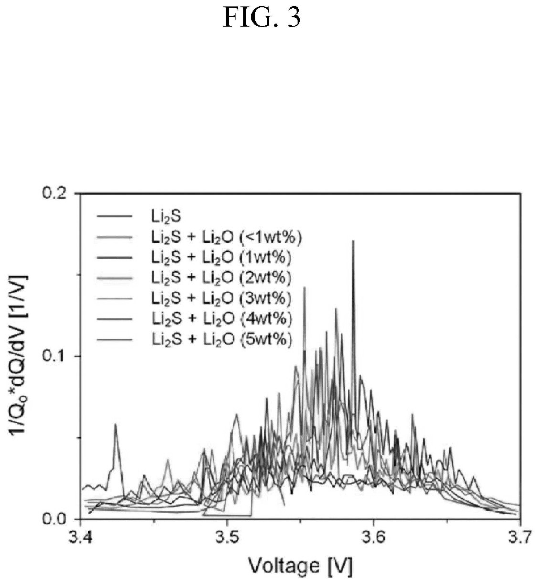

FIG. 3 is an enlarged graph of the dQ/dV area near 3.4 to 3.7 Voltage in the charge-discharge graph of FIG. 2.

Referring to FIG. 3, it is confirmed that the dQ/dV area increased near 3.4 to 3.7 Voltage where Li₂O is expected to react depending on the Li₂O content. Regarding this, a linear calibration curve is confirmed through the method below.

### 4. Second-processing of first-processed charge-discharge graph of the Li-S electrode

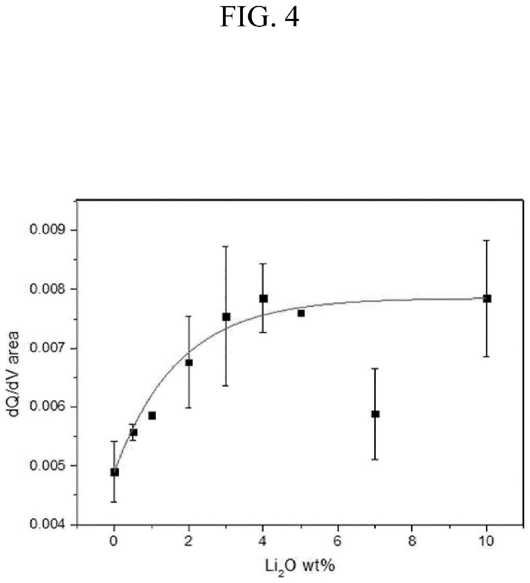

FIG. 4 is a graph confirming a calibration curve for an integrated value for the dQ/dV area range according to 3.4 to 3.7 V of FIG. 3 after calculating it by the method below.

Referring to FIG. 4, an integrated value for the dQ/dV area according to the content of Li₂O is measured. Specifically, a linear tendency is represented when the content of Li₂O is 0 to 5 wt%, but the graph shows a saturated value at a concentration of a certain level or more. More specifically, FIG. 4 represents an absolute value of the area of dQ/dV in the graph according to each Li2O concentration in FIG. 3 by utilizing the integration function of the Origin program.

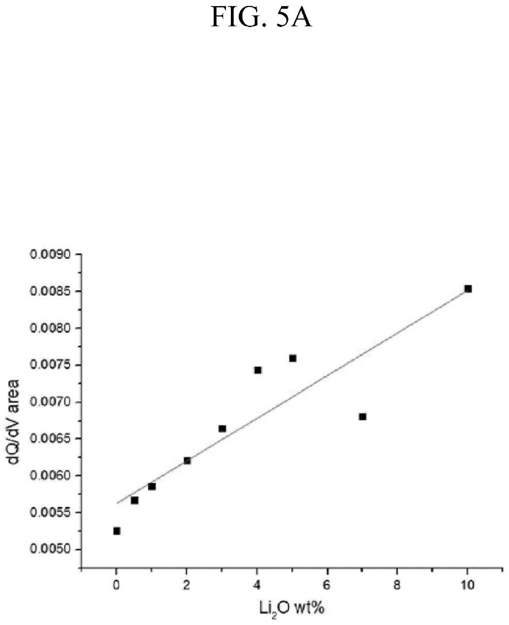

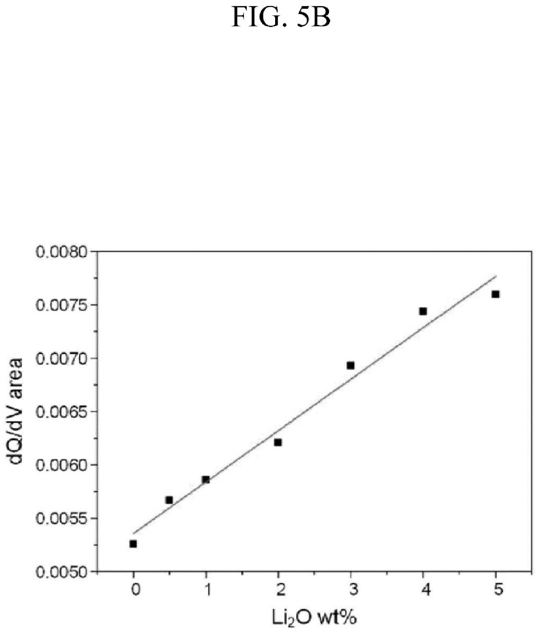

FIG. 5a and FIG. 5b are graphs illustrating a calibration curve for the measurement values of FIG. 4 according to the content of lithium oxide, which is a residual lithium compound.

FIG. 5a is a graph of a calibration curve when the content of the residual lithium compound is 0 to 10 wt%, and FIG. 5b is a graph of a calibration curve when the content of the residual lithium compound is 0 to 5 wt%.

Referring to FIG. 5a and FIG. 5b, an integrated value for the dQ/dV area according to the content of Li₂O is measured. Specifically, a linear tendency is represented in the part where the content of Li₂O is 0 to 5 wt%, but the graph shows a saturated value at a concentration of a certain level or more.

Referring to the reliability value R₁² according to the data for each when the content of the residual lithium compound is 0 to 10 wt%, a high value of 0.79463 is confirmed. Referring to the reliability value R₂² according to the data for each when the content of the residual lithium compound is 0 to 5 wt%, a very high value of 0.97691 is confirmed.

As such, since it is confirmed that R₂² value is higher than R₁² value, it is confirmed that the reliability when the content of the residual lithium compound is 0 to 5 wt% is higher than when it is 0 to 10 wt%.

Table 1 below shows absolute values of the area according to the contents of lithium sulfide and Li₂O. In Table 1 below, content of the lithium sulfide and Li₂O, an absolute value of an area, and an R² value are measured by the method below.

Li₂S + Li₂O content analysis: Li₂O is mixed with Li₂S at a certain concentration, and in the case of an unknown sample, the Li₂O content is predicted through comparison between area values.

Absolute value of area: The area of the dQ/dV graph is represented as the absolute value through the integration function of the Origin program.

R₁² value and R₂² value: R₁² value is a value calculated in a range where the content of Li₂O is 0 to 10 wt%, and R₂² value means reliability of a value calculated in a range where the content of Li₂O is 0 to 5 wt%. R₁² value and R₂² value are obtained by representing the area according to the Li₂O concentration as a scatter graph using an Origin program and a linear fitting function is used for the R₁² value and R₂² value.

**[Table 1]**

| No. | Component | Li₂O content [wt%] | dQ/dV area [unit: mAh] | R₁² | Equation 1 satisfied | R₂² | Equation 2 satisfied |
|---|---|---|---|---|---|---|---|
| 1 | Li₂S | 0 | 0.00526 | | O | 0.97743 | O |
| 2 | Li₂S+Li₂O | <1 | 0.00567 | | O | | O |
| 3 | Li₂S+Li₂O | 1 | 0.00586 | | O | | O |
| 4 | Li₂S+Li₂O | 2 | 0.00621 | | O | | O |
| 5 | Li₂S+Li₂O | 3 | 0.00665 | 0.79434 | O | | O |
| 6 | Li₂S+Li₂O | 4 | 0.00744 | | O | | O |
| 7 | Li₂S+Li₂O | 5 | 0.00760 | | O | | O |
| 8 | Li₂S+Li₂O | 7 | 0.00681 | | O | | X |
| 9 | Li₂S+Li₂O | 10 | 0.00854 | | O | | X |
| * Equation 1 : y=(2.88689×10⁻⁴)x + 0.00563 | | | | | | | |
| ** Equation 2 : y=(4.71536×10⁻⁴)x + 0.00534 | | | | | | | |

Referring to Table 1 above, for the dQ/dV area, according to the Li₂O content in addition to lithium sulfide in the cathode, it is confirmed that the R₁² value is about 0.79434 in a range of Li₂O content of 0 to 10 wt%, and it is confirmed the R₂² value is about 0.97743 in a range of the Li₂O content of 0 to 5 wt%. The reliability value is higher when the Li₂O content is a very small amount. As such, the quality analysis method for lithium sulfide according to an embodiment of the present invention more easily determines the quality of the electrode when the content of Li₂O in lithium sulfide is as small as 5 wt% or less.

The present invention is not limited to the above embodiments but may be manufactured in various different forms, and a person having ordinary skill in the art to which the present invention belongs will be able to understand that the present invention may be implemented in other specific forms without changing the technical spirit or essential features of the present invention. Therefore, it should be understood that the embodiments described above are exemplary in all respects and not restrictive.

## Claims

1. A method for analyzing quality of lithium sulfide in a lithium-sulfur electrode by analyzing a residual lithium compound in a lithium-sulfur active material, the method comprising:
preparing an electrode including a cathode active material;
obtaining first data on voltage according to capacity (Specific Capacity) by charging and discharging the electrode; and
obtaining and analyzing data according to an area value calculated by integrating a differential value (dQ/dV) obtained by differentiating a battery capacity (Q) according to the voltage (V) with respect to the voltage (V) from the first data.

2. The method of claim 1, wherein the obtaining and analyzing data comprises:
obtaining second data on the differential value (dQ/dV) obtained by differentiating the battery capacity (Q) according to the voltage (V) of the electrode with respect to the voltage (V) from a first processing on the first data; and
obtaining third data on an area value calculated by integrating the differential value (dQ/dV) obtained by differentiating the battery capacity (Q) according to the voltage (V) with respect to the voltage (V) from a second processing on the second data.

3. The method of claim 2, comprising
calculating content of the residual lithium compound from the third data according to Equation 1 below. [Equation 1] $0.00665 < Y = aX + b < 0.00744$
(In Equation 1, a is 2.88689 × 10-4, b is 0.00563, Y means a dQ/dV area of an Li₂O electrode, and X means an amount of Li₂O in the lithium sulfide)

4. The method of claim 1, wherein the electrode includes lithium sulfide, a conductive material, and a binder; and
the content of the lithium sulfide is 55 to 75 wt% based on 100 wt% of total content of the lithium sulfide, the conductive material, and the binder.

5. The method of claim 1, wherein the obtaining first data comprises
obtaining data on voltage according to capacity by charging and discharging the electrode under charge-discharge conditions in a range of 1.5 V to 3.9 V at a current rate of 0.01 C-rate.

6. The method of claim 2,
wherein the obtaining second data comprises
differentiating the battery capacity (Q) of the first data with respect to the voltage (V) and obtaining differential value (dQ/dV) obtained by differentiating the battery capacity (Q) with respect to the voltage (V) in an X-axis of voltage and a Y-axis of battery capacity (Q).

7. The method of claim 2, wherein the obtaining second data comprises
extracting the differential value (dQ/dV) obtained by differentiating the battery capacity (Q) with respect to the voltage (V) when the voltage of the electrode is in the range of 3.4 to 3.7 Voltage.

8. The method of claim 2, wherein the obtaining third data comprises
obtaining third data by processing the second data by obtaining a graph for a segment of 3.4 V to 3.7 V of the second data using an Origin program and integrating the graph to obtain an absolute area of each graph.

9. The method of claim 1,
wherein the residual lithium compound is lithium oxide.

10. The method of claim 9,
wherein the lithium oxide is Li₂O.

11. The method of claim 1,
wherein the content of the residual lithium compound is 0 to 10 wt% based on 100 weight % of the lithium sulfide.

12. A method for analyzing quality of lithium sulfide in a lithium-sulfur electrode by analyzing a residual lithium compound in a lithium-sulfur active material, the method comprising:
preparing an electrode including a cathode active material;
obtaining first data on voltage according to capacity (Specific Capacity) by charging and discharging the electrode;
obtaining second data on a differential value (dQ/dV) obtained by differentiating battery capacity (Q) according to the voltage of the electrode with respect to the voltage (V) by first-processing the first data;
obtaining third data on an area value calculated by integrating the differential value (dQ/dV) obtained by differentiating the battery capacity (Q) according to the voltage (V) with respect to the voltage (V) by second-processing the second data; and
calculating content of the residual lithium compound from the third data according to Equation 2 below. <Equation 2> $0.00300 < Y = aX + b < 0.00800$
(In Equation 2, a is 4.71536 × 10⁻⁴, b is 0.00534, Y means a dQ/dV area of an Li₂O electrode, and X means an amount of Li₂O in the lithium sulfide)

13. The method of claim 12,
wherein the content of the residual lithium compound is 0 to 5 wt% based on 100 weight % of the lithium sulfide.

14. The method of claim 12,
wherein the residual lithium compound is lithium oxide.

15. The method of claim 12,
wherein the lithium oxide is Li₂O.
